# EUROPEAN PATENT SPECIFICATION

(11) **EP 3 008 332 B1**
(45) Date of publication and mention of the grant of the patent: **02.08.2023**
(21) Application number: 14748288.9
(22) Date of filing: 05.06.2014
(51) Int. Cl.: F03D 5/00

(54) **SYSTEM FOR STARTING THE FLIGHT OF POWER WING AIRFOILS, IN PARTICULAR FOR WIND GENERATOR**
SYSTEM ZUM STARTEN DER FLUCHT VON LEISTUNGSTRAGFLÄCHENPROFILEN, INSBESONDERE FÜR WINDKRAFTANLAGEN
SYSTÈME DE DÉMARRAGE DU VOL DE PROFILS D'AILE DE PUISSANCE, EN PARTICULIER POUR AÉROGÉNÉRATEUR

(30) Priority: 12.06.2013 IT TO20130480
(43) Date of publication of application: 20.04.2016
(73) Proprietor: Kite Gen Research S.R.L., 10099 San Mauro Torinese (TO) (IT)
(72) Inventor: IPPOLITO, Massimo, 10099 San Mauro Torinese (IT)
(74) Representative: Garavelli, Paolo
(86) International application number: PCT/IT2014/000154
(87) International publication number: WO 2014/199406

(56) References cited:
- WO-A1-92/20917
- US-A1- 2010 276 941
- US-A1- 2013 078 097
- US-B1- 7 582 981

## Description

The present invention refers to a system and to a process for starting the flight of power wing airfoils, in particular for wind generator.

Different application fields are known in which it can be necessary to start the flight of a power wing profile, such as for example a kite-surf under conditions in which there is no wind on the ground. One of such application fields is the one dealing with electric energy wind generators, which exploit the flight of such wing profiles, like those, for example, disclosed in WO92/20917, WO2008004261, WO2007122650, EP1672214, WO2008120257: in fact, though at certain heights there is always available an amount of wind enough to support the flight such profiles, it can happen that, on the contrary, on the ground there are situations in which wind is not enough to allow the autonomous takeoff or the start of flight of the wing profiles without external help.

Therefore, object of the present invention is solving the above prior art problems by providing a system and a process, in particular for wind generator, which allow starting the flight of power wing airfoils also without enough wind on the ground, through at least one autonomous transporting flying carrier, preferably composed of a quadricopter, which takes care of transporting in flight such profile up to a height in which there is enough wind to support in flight and/or for the flight of the profile itself.

The above and other objects and advantages of the invention, as will appear from the following description, are obtained with a system for starting the flight of power wing airfoils as claimed in claim 1.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention, as appears from the enclosed claims.

The present invention will be better described by some preferred embodiments thereof, provided as a non-limiting example, with reference to the enclosed drawings, in which:
- Figures 1, 2 and 3 show some steps of the process of starting the flight; and
- Figure 4 shows an embodiment of the system for starting the flight according to the present invention.

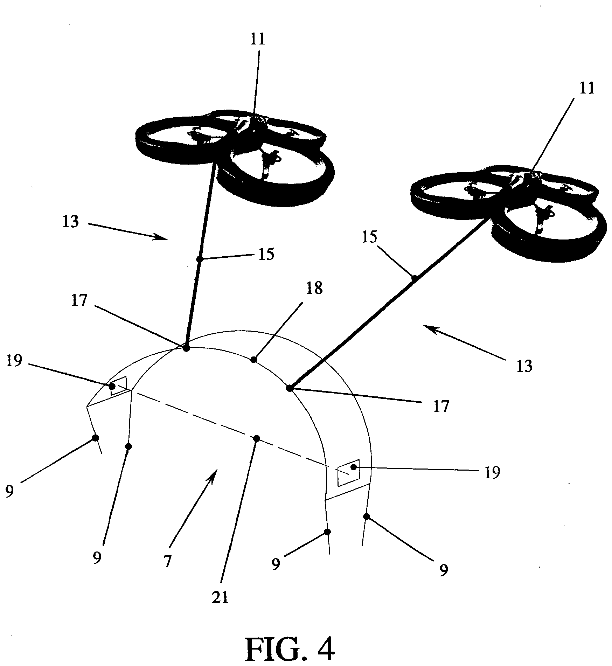

With reference to the Figures, it is possible to note that the system 1 for starting the flight of power wing airfoils 7, in particular for a wind generator 5, comprises:
- at least one wing profile 7 operatively connected, through respective control tie-rods 9 as known in the art, to suitable winches or other control mechanisms (not shown) of the flight of the related wing profile 7;
- at least two autonomous transporting flying carriers, namely carriers 11 adapted to be connected through disengageable connecting means 13 to at least one wing profile 7 and to transport in flight such wing profile 7, such disengageable connecting means 13 being composed of at least two dragging cables 15 having a first end connected to such autonomous transporting flying carrier 11 and a second opposite end to such first end equipped with at least one actuatable engaging/disengaging device 17 adapted to be engaged/disengaged to and from a respective engagement point arranged on the wing profile 7 and, for example, arranged along the attachment edge of the wing profile 7 itself. In a preferred alternative, as it is possible to note in particular in Figure 4, it is possible to provide that the engagement point of the actuatable engaging/disengaging device 17 is arranged along the outlet edge 18 of the wing profile 7 in order to enable the starting of flight of the wing profile 7, so that this latter one, once having reached the desired flight height and having been disengaged from the autonomous transporting flying carrier 11, can take the falling speed along the correct direction, exploiting the force of gravity and easily exit from a possible stalling situation.

Such actuatable engaging / disengaging device 17 is at least one electromagnetic hook and such engagement point arranged on the wing profile 7 is a related element made of metallic material, adapted to be magnetically connected to such electromagnetic hook. Obviously, the length, for example included between 4 m and 6 m, of the dragging cable 15 is the most suitable one to ensure the freedom of manoeuvre in flight of the autonomous transporting flying carrier 11 without the flow produced by its own propellers necessarily impacts onto the wing profile 7.

As it is possible to note always in Figure 4, in case of wing profiles 7 whose sizes and weights are relatively high, the starting of flight of the wing profile 7 is assisted by the combined action of two or more of such autonomous transporting flying carriers 11: in such case, in order to keep the geometry of the wing profile 7 unchanged, which could be subjected to distortions due to the combined traction exerted on different points of its own attachment or outlet edge 18 by two or more autonomous transporting flying carriers 11, such wing profile 7 of the system 1 according to the present invention further comprises at least one measuring system 19, for example of the ultrasound type 21, which high frequency triangulates the relative positions of the autonomous transporting flying carriers 11 and of the wing profile 7.

In a preferred embodiment of the system 1 according to the present invention, such autonomous transporting flying carrier 11 is a helicopter with one or more propellers, such as, for example, a quadricopter, an octocopter, a multicopter, etc., and, still more preferably, with electric supply. In fact, the electric supply of the autonomous transporting flying carrier 11 is particularly suitable, since the manoeuvre for starting the flight of the wing profile 7 can be completed in few minutes and, therefore, compatibly with the energetic autonomy of such carrier 11, possibly allowing the carrier 11 itself to autonomously go back to a suitable recharging station, once having taken in flight and disengaged the wing profile 7 itself. For such purpose, the system 1 according to the present invention can therefore further comprise at least one landing, storing and energy recharging station (not shown) of at least one of such autonomous transporting flying carriers 11.

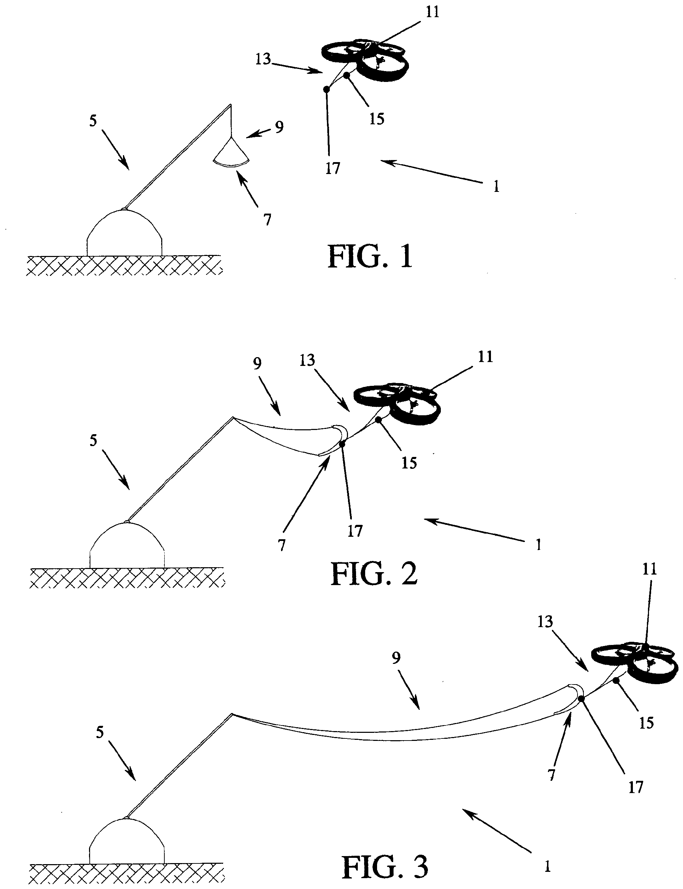

It is also disclosed a process for starting the flight of power wing airfoils 7, in particular for wind generator 5, preferably through a system 1 according to the present invention as previously described, such system 1 in particular comprising at least one wing profile 7 operatively connected, through respective control tie-rods 9 as known in the art, to suitable winches or other control mechanisms (not shown) of the flight of the related wing profile 7, and at least two autonomous transporting flying carriers 11 adapted to be connected through disengageable connecting means 13 to at least one wing profile 7 and a transport in flight such wing profile 7. In particular, the process according to the present invention comprises the steps of:
- starting from a stalling position of the power wing profile 7 (like the one, for example, shown in Figure 1), taking at least two autonomous transporting flying carriers 11 next to such power wing profile 7;
- engaging such power wing profile 7 to such autonomous transporting flying carriers 11 through such disengageable connecting means 13 (as shown, for example, in Figure 2);

- transporting in flight such power wing profile 7 through traction by such autonomous transporting flying carriers 11, possibly taking care of suitably unwinding the related control tie-rods 9 (as shown, for example, in Figure 3);
- once having reached, by such power wing profile 7, a height in which there is enough wind for supporting in flight and/or the flight of the profile 7, disengaging such autonomous transporting flying carriers 11 from such power wing profile 7.

Possibly, the process according to the present invention can comprise the step of taking back such autonomous transporting flying carriers 11 to a landing, storing and energy recharging station.

## Claims

1. System (1) for starting the flight of power wing airfoils (7), in particular for a wind generator (5), comprising:
- at least one wing profile (7), operatively connected through control tie-rods (9), to winches or other control mechanisms of a flight of said wing profile (7);
- at least two autonomous transporting 'flying vectors, namely carriers (11), adapted to be connected through disengageable connecting means (13) to the at least one wing profile (7) and to transport in flight said wing profile (7), said disengageable connecting means (13) being composed of at least one dragging cable (15) having a first end connected to said autonomous transporting flying carriers (11) and a second opposite end connected to said first end equipped with at least one actuatable engaging/disengaging device (17) adapted to be engaged/disengaged to and from a respective engagement point arranged on said wing profile (7), a starting of the flight of said wing profile (7) being assisted by a combined action of two or more of said autonomous transporting flying carriers (11),
**characterized in that** said actuatable engaging/disengaging device (17) is at least one electromagnetic hook and said engagement point arranged on said wing profile (7) is a related element made of metallic material adapted to be magnetically connected to said electromagnetic hook;
and **in that** said wing profile (7) comprises at least one measuring system (19), preferably of an ultrasound type (21), adapted to high frequency triangulate the relative positions of said autonomous transporting flying carriers (11) and of said wing profile (7).

2. System (1) according to the previous claim, **characterized in that** said engagement point of said actuatable engaging/disengaging device (17) is arranged along an outlet, namely leading, edge (18) of said wing profile (7).

3. System (1) according to any one of the previous claims, **characterized in that** each of said autonomous transporting flying carriers (11) is a helicopter with one or more propellers, and preferably a quadricopter, an octocopter or a multicopter.

4. System (1) according to any one of the previous claims, **characterized in that** said autonomous transporting flying carriers (11) are with electric supply.

5. System (1) according to any one of the previous claims, **characterized in that** it comprises at least one landing, storing and energy recharging station of said autonomous transporting flying carriers (11).

## Patentansprüche

1. System (1) zum Abschuss von Tragflügeln (7), insbesondere für einen Windgenerator (5), umfassend:
- mindestens einem Tragflügel (7), der durch Steuerstangen (9) mit Winden oder anderen Mechanismen zum Steuern eines Fluges des Tragflügels (7) operativ verbunden ist;
- mindestens zwei autonom fliegende Transportvektoren (11), die mittels lösbarer Verbindungsmittel (13) mit mindestens einem Tragflügel (7) verbunden werden können und das Tragflügel (7) im Flug transportieren können, wobei die lösbaren Verbindungsmittel (13) bestehend aus mindestens einem Schleppkabel (15) mit einem ersten Ende, das mit den autonomen fliegenden Transportvektoren (11) verbunden ist, und einem zweiten Ende gegenüber dem ersten Ende, das mit mindestens einer aktivierbaren Einhänge-/Aushängevorrichtung (17) ausgestattet ist geeignet zum Einhaken/Aushaken an und von einem jeweiligen Hakenpunkt, der auf dem Tragflügel (7) angeordnet ist, wobei ein Flug des Tragflügels (7) durch eine kombinierte Aktion von zwei oder mehr der fliegenden Transportvektoren (11) autonom unterstützt wird,
**dadurch gekennzeichnet, dass** die aktivierbare Einhänge-/Aushängevorrichtung (17) mindestens ein elektromagnetischer Haken ist und der an dem Tragflügel (7) angeordnete Kopplungspunkt ein relatives Element aus metallischem Material ist, das magnetisch mit dem elektromagnetischen Haken verbunden werden kann;
und durch die Tatsache, dass das Tragflügel (7) mindestens ein Messsystem (19), vorzugsweise vom Ultraschalltyp (21), umfasst, das in der Lage ist, die relativen Positionen der antomon fliegenden Transportvektoren (11) und der Tragflügel (7) mit hoher Frequenz zu triangulieren.

2. System (1) nach dem vorhergehenden Anspruch, **dadurch gekennzeichnet, dass** der Einhakpunkt der aktivierbare Einhänge-/Aushängevorrichtung (17) entlang einer Hinterkante, d. h. einer Befestigung (18) des Tragflügel (7) angeordnet ist.

3. System (1) nach einem der vorhergehenden Ansprüche, **dadurch gekennzeichnet, dass** jeder der autonom fliegenden Transportvektoren (11) ein Helikopter mit einem oder mehreren Propellern und vorzugsweise ein Quadrocopter, ein Oktocopter oder ein Multicopter ist.

4. System (1) nach einem der vorhergehenden Ansprüche, **dadurch gekennzeichnet, dass** die autonom fliegenden Transportvektoren (11) elektrisch angetrieben sind.

5. System (1) nach einem der vorhergehenden Ansprüche, **dadurch gekennzeichnet, dass** es mindestens eine Lande-, Speicher- und Energieaufladestation für die autonom fliegenden Transportvektoren (11) umfasst.

## Revendications

1. Système (1) de lancement de profil aérodynamique (7), notamment pour éolienne (5), comprenant :
- au moins un profil aérodynamique (7), fonctionnellement relié par des tiges de commande (9) à des treuils ou autres mécanismes pour commander un vol dudit profil aérodynamique (7);
- au moins deux vecteurs de transport volants autonomes (11) aptes à être reliés au moyen de moyens de liaison détachables (13) à au moins une profil aérodynamique (7) et à transporter ladite profil aérodynamique (7) en vol, lesdits moyens de liaison détachables (13) étant composé d'au moins un câble de remorquage (15) ayant une première extrémité reliée auxdits vecteurs de transport volants autonomes (11) et une seconde extrémité opposée à ladite première extrémité équipée d'au moins un dispositif d'accrochage/décrochage (17) actionnable apte à être accroché/décroché sur et à partir d'un point d'accrochage respectif agencé sur ladite profil aérodynamique (7), un vol de ladite profil aérodynamique (7) étant assisté par une action combinée de deux ou plusieurs desdits vecteurs volants de transport (11) autonomes,
**caractérisé en ce que** ledit dispositif d'accrochage/décrochage (17) activable est au moins un crochet électromagnétique et ledit point d'accrochage agencé sur ladite profil aérodynamique (7) est un élément relatif en matériau métallique susceptible d'être connecté magnétiquement audit crochet électromagnétique;
et par le fait que ladite profil aérodynamique (7) comporte au moins un système de mesure (19), de préférence de type ultrasonore (21), apte à trianguler à haute fréquence les positions relatives desdits vecteurs de transport volants autonomes (11) et dudit profil aérodynamique (7).

2. Système (1) selon la revendication précédente, **caractérisé en ce que** ledit point d'accrochage dudit dispositif d'accrochage/décrochage actionnable (17) est agencé le long d'un bord de fuite, c'est-à-dire d'attache (18) de ladite profil aérodynamique (7).

3. Système (1) selon l'une quelconque des revendications précédentes, **caractérisé en ce que** chacun desdits vecteurs de transport volants autonomes (11) est un hélicoptère à une ou plusieurs hélices, et de préférence un quadricoptère, un octocoptère ou un multicoptère.

4. Système (1) selon l'une quelconque des revendications précédentes, **caractérisé en ce que** lesdits vecteurs de transport volants autonomes (11) sont alimentés électriquement.

5. Système (1) selon l'une quelconque des revendications précédentes, **caractérisé en ce qu'**il comprend au moins une station d'atterrissage, de stockage et de recharge d'énergie desdits vecteurs volants autonomes de transport (11).
